# EUROPEAN PATENT APPLICATION

(11) **EP 4 056 036 A1**
(43) Date of publication of application: **14.09.2022**
(21) Application number: 21171665.9
(22) Date of filing: 30.04.2021
(51) Int. Cl.: A01N 25/08, A01N 27/00, A01N 49/00, A01N 55/02, A01N 65/06, A01N 65/22, A01N 65/28, A01N 65/36, A01N 65/42, A01P 7/04, A01P 17/00

(54) **PEST CONTROL COMPOSITION**

(30) Priority: 08.03.2021 IN 202141009595
(71) Applicant: Reckitt & Colman (Overseas) Hygiene Home Limited, Slough, Berkshire SL1 3UH (GB)
(72) Inventor: DUTT CHOUDHURY, Sumana, 122001 Haryana (IN); DAS, Avijit, 122001 Haryana (IN); GANDHI, Puneet, 122001 Haryana (IN); PANT, Megha, 122001 Haryana (IN); MAKKAPATI, Anil Kumar, 122001 Haryana (IN); SHANMUGAM PERUMAL, Shanthakumar, 122001 Haryana (IN); VENKATRAMANI, Ganesh, 122001 Haryana (IN)
(74) Representative: Paredes Rojas, José Francisco

(57) **Abstract**

The present invention relates to a pest control composition comprising hydrophilic fumed silica, at least one organic solvent and at least one active ingredient selected from the group consisting of eucalyptus oil, citronella oil, d-limonene, cedarwood oil, cinnamon oil, clove oil, garlic oil, lavender oil, lime oil, orange oil, pine oil, geranium oil, peppermint oil, rosemary oil, spearmint oil, cornmint oil, geraniol, thymol, and combinations thereof; wherein the composition comprises less than 10 wt.% water, based on the total weight of the composition; wherein the composition has the form of a gel. The invention also relates to a pest control product comprising a chamber and the pest control composition according to the invention. It further relates to a use of a pest control composition or product for repelling insects and to a method for repelling insects.

## Description

The present invention relates to a pest control composition, to a product comprising the pest control composition, to a use of the pest control composition or product for repelling insect, and to a method for repelling insects.

### Background

Insects carry surprisingly large amounts of bacteria. For example, a single fly can contaminate feed or food with enough bacteria to cause illness. Moist, warm, decaying material protected from sunlight is favoured for fly eggs to hatch and in only 8 short hours for fly larvae or maggots to grow. Flies are transmitters of disease primarily because they feed on human and animal wates. The dangerous bacteria present in theses wastes stick to the mouth, footpads and hairs of flies and may then be deposited on food. Fly faeces, which contain disease-bearing organisms, can also contaminate human food. And since flies have no teeth and must take their nourishment in liquid form, they spit on solid food and let it dissolve before consuming. Fly spittle, or vomitus, is swarming with bacteria and contaminates feed and areas where feed is stored.

Mosquitoes, for instance, are the primary carrier for parasites that cause malaria and viruses that cause dengue fever, Chikungunya, Zika and yellow fever. Several approaches have been developed for managing mosquito populations and mitigating the threat to health posed by mosquitoes. The most common approach is to use a chemical insecticide to kill mosquito larvae or pupae or to repel or kill adult mosquitoes. For example, WO 2006/111750 describes an aerosol insecticide, in which one or more synthetic pyrethroids are used as active ingredients. However, chemical insecticides can be toxic to humans and other non-target organisms. Moreover, the widespread global use of chemical insecticides has resulted in mosquitoes developing resistance to many chemical insecticides.

Natural products, such as essential oils, have gained significant interest as potential vector control agents in view of their high target specificity and low toxicity towards humans and other non-target organisms. They are also friendlier to the environment than chemical insecticides and do not tend to accumulate along food chains. Several essential oils have been investigated as potential insecticides. In one study, thyme oil, catnip oil, amyris oil, eucalyptus oil and cinnamon oil were tested against mosquito larvae and as repellents against adult mosquitoes (see Zhu et al., Journal of the American Mosquito Control Association, 2006, 22(3): 515-5220). In another study, the larvicidal and repellent potential of *Mentha piperita* essential oil was investigated (see Kumar et al., Asian Pacific Journal of Tropical biomedicine, 2011, 1(2): 85-88).

Developing suitable delivery vehicles for essential oils and combinations of essential oils has proven challenging. For example, emulsified oil-in-water product forms are desirable for use in coolers, accumulated waters, overhead tanks and the like, as well as for use in sprays. It is believed that such formulations could provide a potent mode for making insect repellents and killing products. Essential oils, in particular copaiba oil, have been formulated in sheets or films containing these, as shown in US 2006/0257441. Another suitable delivery vehicle is to formulate the essential oils in the form of a gel; however, one drawback of known products is that it is difficult to control the emanation rate and the product needs to be replaced after only 1 day.

Accordingly, even if an essential oil or a component thereof has known insecticidal activity, this does not necessarily mean that the insecticidal activity will be high once formulated in the form of an emulsion or a gel.

Therefore, there is a need for natural-based pest control compositions with controlled and prolonged emanation rate, and hence having prolonged insect repellent activity, which can be used at ambient temperature. The compositions must be suitable to be used without the need of an external source of energy, such as heat, to release the active ingredients.

It is an object of the present invention to provide a pest control composition and a pest control product having natural-based ingredients as active ingredients. The composition is in the form of a gel, e.g. a non-aqueous gel, and preferably it is an insect repellent composition, such as a flying-insects repellent composition.

It is a further object of the present invention to provide an environmentally friendly pest control composition and pest control product that are environmentally friendly and safe to humans and domestic animals.

### Summary of the invention

In a first aspect, the present invention relates to a pest control composition comprising hydrophilic fumed silica, at least one organic solvent and at least one active ingredient selected from the group consisting of eucalyptus oil, citronella oil, d-limonene, cedarwood oil, cinnamon oil, clove oil, garlic oil, lavender oil, lime oil, orange oil, pine oil, geranium oil, peppermint oil, rosemary oil, spearmint oil, cornmint oil, geraniol, thymol, and combinations thereof; wherein the composition comprises less than 10 wt.% water, based on the total weight of the composition; wherein the composition has the form of a gel.

In one embodiment, the at least one active ingredient is selected from the group consisting of d-limonene, orange oil, pine oil, geraniol, and combinations thereof; preferably wherein the at least one active ingredient is selected from the group consisting of d-limonene, orange oil, pine oil, and combinations thereof or wherein the at least one active ingredient is selected from the group consisting of d-limonene, geraniol, and combinations thereof.

In another embodiment, the hydrophilic fumed silica has a specific surface area of between 50 m²/g and 1000 m²/g, preferably between 75 m²/g and 750 m²/g, more preferably between 100 m²/g and 500 m²/g, even more preferably between 125 m²/g and 250 m²/g.

In one embodiment, the at least one organic solvent is selected from the group consisting of silicone oils, fatty acid esters, fatty alcohols, glycols, and combinations thereof; preferably selected from the group consisting of fatty acid esters, glycols, and combinations thereof, more preferably wherein the at least one organic solvent comprises or consists of isopropyl myristate, dipropylene glycol and combinations thereof, even more preferably wherein the at least one organic solvent comprises or consists of isopropyl myristate.

In another embodiment, the composition comprises:
- at least 30 wt.% of the at least one active ingredient, based on the total weight of the composition, preferably at least 40 wt.%, more preferably at least 50 wt.%, even more preferably between 50 wt.% and 80 wt.%; and/or
- at least 0.1 wt.% of hydrophilic fumed silica, based on the total weight of the composition, preferably at least 0.5 wt.%, more preferably at least 1 wt.%, even more preferably between 1 wt. % and 20 wt.%; and/or
- between 1 wt.% and 30 wt.% of the at least one organic solvent, based on the total weight of the composition, preferably between 5 wt.% and 25 wt.%, more preferably between 10 wt.% and 20 wt.%.

In an embodiment, the composition further comprises colloidal silica, preferably having a bulk density of between 10 g/L and 120 g/L, preferably between 20 g/L and 110 g/L, more preferably between 30 g/L and 100 g/L, even more preferably between 40 g/L and 80 g/L.

In an embodiment, the composition comprises between 1 wt.% and 30 wt.% of colloidal silica, based on the total weight of the composition, preferably between 5 wt.% and 25 wt.%, more preferably between 10 wt.% and 20 wt.%

In another embodiment, the composition further comprises one or more fragrances, preferably between 0.1 wt.% and 20 wt.% of the one or more fragrances, based on the total weight of the composition, more preferably between 0.5 wt.% and 15 wt.%, even more preferably between 1 wt.% and 10 wt.%; wherein preferably the one or more fragrances comprise or consist of citral.

In another embodiment, the composition is an insect repellent composition, preferably a flying-insects repellent composition.

In a second aspect, the invention relates to a pest control product comprising a chamber and the pest control composition according to the first aspect of the invention, wherein the pest control composition is contained within the chamber and the chamber has at least one wall which enables the vapours of the composition to diffuse into the environment in which the product is placed, preferably wherein the at least one wall comprises a first layer made of polyethylene laminated onto a second layer made of paper, the first layer being in direct contact with the composition.

In one embodiment, the first layer made of polyethylene and being in direct contact with the composition has a thickness of between 10 micron and 80 micron, preferably between 20 micron and 60 micron, more preferably between 25 micron and 55 micron; and/or the second layer made of paper has a grammage of between 80 g/m² and 180 g/m², preferably between 100 g/m² and 160 g/m², more preferably between 120 g/m² and 150 g/m².

In another embodiment, the product further comprises a container made of an impermeable sheet, in which the chamber containing the pest composition is located.

In one embodiment, the product comprises between 5 g and 20 g of the pest control composition, preferably between 8 g and 15 g, more preferably between 8 g and 12 g.

In a third aspect, the invention relates to a use of the pest control composition according to the first aspect of the invention or the pest control product according to the second aspect of the invention for repelling insects, preferably flying insects, more preferably mosquitoes, flies and moths.

In a fourth aspect, the invention relates to a method for repelling insects comprising:
a) providing the composition according to the first aspect of the invention or the pest control product according to the second aspect of the invention;
b) placing the composition according to the first aspect of the invention or the pest control product according to the second aspect of the invention in a place that allows for air circulation into the area from which insects are to be repelled;
c) optionally repeating steps a) and b) after a period of between 15 days to 45 days, preferably after a period of between 20 days to 40 days, more preferably after a period of 25 days to 35 days.

### Definitions

The following definitions are used in the present application.

"Pest control composition" as used in the present patent application means: a composition comprising at least one active ingredient, which is used as a means for directly or indirectly controlling, destroying, attracting or repelling a pest, for example, insects.

"Pest control product" as used in the present patent application means: a product comprising a pest control composition, which is used as a means for directly or indirectly controlling, destroying, attracting or repelling a pest, for example, insects.

"Active ingredient" as used in the present application means: a component of a pest control composition to which the intended effect(s) of the composition is(are) attributed, such as controlling, destroying, attracting or repelling insects.

"Gel" as used in the present application means: three-dimensional network which behaves like a solid and that exhibits no flow in the steady-state. A gel has a yield stress, meaning that this material does not flow until a certain shear-stress threshold is overcome.

"Hydrophilic fumed silica" as used in the present application means: chemical compound with the formula SiO₂, which has freely accessible silanol groups (Si-OH) on the particle surface, causing them to be hydrophilic. It is produced in a flame and consists of microscopic droplets of amorphous silica fused silicon dioxide fused into branched, chainlike, three-dimensional secondary particles, which agglomerate into tertiary particles. Hydrophilic fumed silica is also known as hydrophilic fumed silicon dioxide.

"Colloidal silica" as used in the present patent application means: chemical compound with the formula SiO₂. It consists of discrete and non-aggregated silica or silicon dioxide particles with a very narrow particle size distribution. Colloidal silica is also known as colloidal silicon dioxide.

"Essential oils" as used in the present application means: aromatic, volatile compounds extracted from plants. These are obtained through distillation or mechanical methods and they contain the natural chemicals that give a particular plant its specific odour and flavour.

"Eucalyptus oil" as used in the present application means: essential oil obtained from the leaf of Eucalyptus. It comprises at least 45 wt.% of 1,8-cinelol, based on the total weight of the essential oil, for example between 45 wt.% and 85 wt.% or between 49 wt.% and 84 wt.%.

"Citronella oil" as used in the present application means: essential oil obtained from the leaves and stems of lemongrass. It comprises at least 5 wt.% of citronellal, at least 15 wt.% of geraniol, and at least 5 wt.% of citronellol based on the total weight of the essential oil, for example between 5 wt.% and 20 wt.% of citronellal, between 15 wt.% and 25 wt.% of geraniol, and between 5 wt.% and 10 wt.% of citronellol or between 30 wt.% and 50 wt.% of citronellal, between 20 wt.% and 30 wt.% of geraniol, and between 10 wt.% and 20 wt.% of citronellol.

"d-limonene" as used in the present application means: cyclic monoterpene, which is the major component in the oil of citrus fruits peels. It occurs more commonly in nature as the fragrance of oranges.

"Cedarwood oil" as used in the present application means: essential oil obtained from various types of conifers, in particular the pine or cypress botanical families. The major components of this oil are cedrol and cedrane.

"Cinnamon oil" as used in the present application means: essential oil obtained from the leaves from plants in the genus *Cinnamomum.* It comprises at least 50 wt.% of cinnamaldehyde, based on the total weight of the essential oil, for example between 50 wt.% and 90 wt.% or between 60 wt.% and 75 wt.%.

"Clove oil" as used in the present application means: essential oil obtained from the clove plant. It comprises at least 50 wt.% of eugenol, based on the total weight of the essential oil, for example between 50 wt.% and 95 wt.% or between 60 wt.% and 92 wt.%.

"Garlic oil" as used in the present application means: essential oil obtained from the garlic. The major components of this oil are alkyl methyl trisulfide, alkyl (E)-1-propenyl disulphide, dimethyl trisulfide, diallyl disulphide, diallyl trisulfide, and methyl (E)-1-propenyl disulphide.

"Lavender oil" as used in the present application means: essential oil obtained from the flower spikes of certain species of lavender. The major components of this oil are linalool and linalyl acetate.

"Lime oil" as used in the present application means: essential oil obtained from the rind of limes. The major components of this oil are limonene, α-terpineol, terpinen-4-ol, 1,4-cineole, 1,8-cineole, β-pinene, p-cymene, β- bisabolene, and citral.

"Citral" as used in the present application means: pair of mixtures of terpenoids with the molecular formula C₁₀H₁₆O. It has a strong lemon (citrus) odour and is used as an aroma compound. It is also known as 3,7-dimethyl-2,6-octadienal or lemonal.

"Orange oil" as used in the present application means: essential oil obtained from the rind of an orange fruit. It comprises at least 90 wt.% of Limonene, based on the total weight of the essential oil, for example between 90 wt.% and 97 wt.% or between 93 wt.% and 96 wt.%. It may comprise other compounds such as Linalool, Myrcene, α-Pinene, and Sabinene.

"Pine oil" as used in the present application means: essential oil obtained from the stumps, needles, twigs and cones for a variety of pines. It comprises a mixture of monoterpene hydrocarbons (α,β-pinene) and oxygenated monoterpenes (terpineol, borneol, bornyl acetate).

"Geranium oil" as used in the present application means: essential oil obtained from the leaves of *Pelargonium graveolens.* The major components of this oil are citronellol and geraniol.

"Peppermint oil" as used in the present application means: essential oil obtained from the leaves of the peppermint plant. The major components of this oil are menthol and menthone.

"Rosemary oil" as used in the present application means: essential oil obtained from rosemary. The major components of this oil are 1,8-cineole, camphor, and α-pinene.

"Spearmint oil" as used in the present application means: essential oil obtained from the leaves, stems and flowering tops of the spearmint plant. The major components of this oil are carvone, cis-carveol, and limonene.

"Cornmint oil" as used in the present application means: essential oil obtained from *Mentha arvensis.* The major component of this oil is menthol.

"Geraniol" as used in the present application means: monoterpenoid and alcohol with the molecular formula C₁₀H₁₈O.

"Thymol" as used in the present application means: natural monoterpenoid phenol derivative of p-Cymene, having the molecular formula C₁₀H₁₄O.

"3-Chamber test" as used in the present application means: test for determining repellency by observing the insect entry prevention property of a pest control composition or a pest control product against flying insects, in particular mosquitoes and houseflies. In this test, three chambers of 10m³ each are placed next to each other and they are connected with a window between them. A sample of the pest control composition or the pest control product is placed in a first chamber C1, and it is allowed to saturate the interior of the chamber by keeping the window closed for 6 hours. During saturation of chamber C1, all windows are closed. After 6 hours of saturation, flying insects are released and acclimatised for one minute.

For mosquitoes, a certain number of the insects is released in a second chamber, C2, located next to the first chamber, C1, and they acclimatise for one minute. The windows of the chambers are opened. Experimenters located in C1 and in a third chamber, C3, located next to the second chamber, C2, observe during 25 minutes how many mosquitoes in average enter C1 and how many in average enter C3. This means that C2 is in between C1 and C3. The same procedure was repeated after 7 days, after 14 days, after 21 days, and after 28 days without changing the composition or product in C1. Hence, a new batch of insects is introduced into chamber C2 after 7 days, after 14 days, after 21 days, and after 28 days aged samples to understand the effectiveness of the product or its composition at differential time point and to confirm product efficacy till 28 days from the first day/initial of sample usage. The %age of repellency is given by the average number of mosquitoes that is prevented by a pest control composition or a pest control product from entering chamber C1, i.e. the chamber with any pest control composition or pest control product.

For houseflies, the same procedure as for mosquitoes is followed, but food (e.g. a milk- soaked cotton pad) is placed at the centre of a table in chamber C1 and chamber C3. The observation time is 60 minutes instead of 25 minutes.

### Detailed description of the invention

In a first aspect, the present invention relates to a pest control composition comprising hydrophilic fumed silica, at least one organic solvent and at least one active ingredient selected from the group consisting of eucalyptus oil, citronella oil, d-limonene, cedarwood oil , cinnamon oil, clove oil, garlic oil, lavender oil, lime oil, orange oil, pine oil, geranium oil, peppermint oil, rosemary oil, spearmint oil, cornmint oil, geraniol, thymol, and combinations thereof; wherein the composition comprises less than 10 wt.% water, based on the total weight of the composition; wherein the composition has the form of a gel.

The composition according to the invention contains only natural-based active ingredients. This means that the composition is free of any synthetic pyrethroid and natural pyrethrins. Pyrethroids are not environmentally friendly as they are toxic to aquatic organisms, including fish. Pyrethrins have been shown to have toxic effects to humans.

The composition according to the invention passively releases the active molecules of the active ingredients into the environment, which bind with the olfactory receptors located on the antenna, maxillary palp, and wings of a flying insect and disrupt the process of olfaction. This causes an imbalance in the insect orientation and, hence, it gets repelled. In a preferred embodiment, the at least one active ingredient is selected from the group consisting of d-limonene, orange oil, pine oil, geraniol, and combinations thereof; preferably the at least one active ingredient is selected from the group consisting of d-limonene, orange oil, pine oil, and combinations thereof or the at least one active ingredient is selected from the group consisting of d-limonene, geraniol, and combinations thereof.

The present inventors have observed that when the at least one active ingredient mixes with the hydrophilic fumed silica, a gel is formed. It is believed that the oxygenated compound present in the at least one active ingredient forms hydrogen bonds with the silanol group in the hydrophilic fumed silica, to form a three- dimensional structure, which is the gel. Preferably the gel is a self-stranding gel, which does not flow in steady state, for example, at a temperature of between 15°C and 30 °C and 1 atm pressure.

In another embodiment, the gel has a viscosity of between 15 000 mPa·s and 50 000 mPa·s measured at 20°C and 50 rpm, for example after 30 seconds, using a Helipath S95 spindle; preferably the viscosity is between 17 000 mPa·s and 40 000 mPa·s, more preferably the viscosity is between 19 000 mPa·s and 30 000 mPa·s. The person skilled in the art will understand that at 50 rpm the gel flows because its yield stress is overcome.

The composition comprises less than 10 wt.% water, based on the total weight of the composition, preferably less than 5 wt.%, more preferably less than 1 wt.%, even more preferably, the composition is substantially free of water. By "substantially free" it is meant that no water is intentionally added to the composition. Hence, in an embodiment, the composition has the form of a non-aqueous gel.

The composition may comprise at least 30 wt.% of the at least one active ingredient, based on the total weight of the composition, preferably at least 40 wt.%, more preferably at least 50 wt.%, even more preferably between 50 wt.% and 80 wt.%.

For example, the composition may comprise:
- between 15 wt.% and 50 wt.% of d-limonene, based on the total weight of the composition, preferably between 20 wt.% and 40 wt.%; and/or
- between 15 wt.% and 50 wt.% of orange oil, based on the total weight of the composition, preferably between 20 wt.% and 30 wt.%; and/or
- between 5 wt.% and 20 wt.% of pine oil, based on the total weight of the composition, preferably between 10 wt.% and 15 wt.%; and/or
- between 25 wt.% and 55 wt.% of geraniol, based on the total weight of the composition, preferably between 30 wt.% and 50 wt.%.

In a preferred embodiment, the pest control composition is a non-aqueous gel pest control composition comprising hydrophilic fumed silica, at least one organic solvent and at least one active ingredient selected from the group consisting of eucalyptus oil, citronella oil, d-limonene, cedarwood oil , cinnamon oil, clove oil, garlic oil, lavender oil, lime oil, orange oil, pine oil, geranium oil, peppermint oil, rosemary oil, spearmint oil, cornmint oil, geraniol, thymol, and combinations thereof; wherein the composition is substantially free of water.

### Hydrophilic fumed silica

Fumed silica is manufactured in a continuous flame hydrolysis of a substance such as silicon tetrachloride. In the flame, hydrogen and oxygen are reacted in the presence of silicon tetrachloride. The formation of the hydrophilic fumed silica can be described by a combination of an oxyhydrogen reaction, in which water is formed, and a hydrolysis of silicon tetrachloride with this water to form hydrochloric acid and the silicon dioxide. In the process nuclides are formed, which after collision form primary particles, followed by the formation of aggregates and finally agglomerates. These agglomerates are the hydrophilic fumed silica.

The hydrophilic fumed silica may have a specific surface area of between 50 m²/g and 1000 m²/g, preferably between 75 m²/g and 750 m²/g, more preferably between 100 m²/g and 500 m²/g, even more preferably between 125 m²/g and 250 m²/g. The person skilled in the art understands that the specific surface area is measured according to the Brunauer-Emmett-Teller (BET) theory, specifically according to standard ISO 9277.

Examples of hydrophilic fumed silica are Aerosil ^{™} produced by Evonik; for example: Aerosil ^{™} 90, Aerosil ^{™} 130, Aerosil ^{™} 150, Aerosil ^{™} 200, Aerosil ^{™} 255, Aerosil ^{™} 300, Aerosil ^{™} 380, Aerosil ^{™} OX 50. In particular, Aerosil ^{™} 200, which has a specific surface area of between 175 m²/g and 225 m²/g.

The composition may comprise at least 0.1 wt.% of hydrophilic fumed silica, based on the total weight of the composition, preferably at least 0.5 wt.%, more preferably at least 1 wt.%, even more preferably between 1 wt. % and 20 wt.%. Especially preferred, the composition comprises between 1 wt.% and 10 wt.% of hydrophilic fumed silica.

### Organic solvent

The composition comprises at least one organic solvent. By way of non-limiting examples, organic solvents may be: hydrocarbon oils such as paraffin or mineral oils; waxes such as beeswax or paraffin wax; natural oils such as may be derived from plants, such as sunflower oil, apricot kernel oil, shea butter or jojoba oil; silicone oils such as dimethicone, cyclomethicone or cetyldimethicone; fatty acid esters such as isopropyl palmitate, isopropyl myristate, dioctylmaleate, glyceryl oleate and cetostearyl iso-nonanoate; fatty alcohols such as cetyl alcohol or stearyl alcohol and mixtures thereof (e.g. cetearyl alcohol); polypropylene glycol or polyethylene glycol ethers, e.g. PPG- 14 butyl ether; as well as mixtures of any of the foregoing.

In a preferred embodiment, the at least one organic solvent is selected from the group consisting of silicone oils, fatty acid esters, fatty alcohols, glycols, and combinations thereof; preferably selected from the group consisting of fatty acid esters, glycols, and combinations thereof, more preferably wherein the at least one organic solvent comprises or consists of isopropyl myristate, dipropylene glycol and combinations thereof, even more preferably wherein the at least one organic solvent comprises or consists of isopropyl myristate.

The organic solvent is used in the composition to control the emanation rate of the active ingredients.

The composition may comprise between 1 wt.% and 30 wt.% of the at least one organic solvent, based on the total weight of the composition, preferably between 5 wt.% and 25 wt.%, more preferably between 10 wt.% and 20 wt.%.

In an embodiment, the composition comprises between 10 wt.% and 20 wt.% of isopropyl myristate.

### Colloidal silica

Colloidal silica can be prepared by several methods and starting materials. For example, ion exchange of aqueous silicates, hydrolysis and condensation of silicon compounds, direct oxidation of silicon, and milling and peptization of silica powder. One important characteristic is that colloidal silica is normally provided as discrete non-aggregated particles with a very narrow particle size distribution.

The present inventors have observed that if colloidal silica is added to the composition according to the invention, then the emanation rate of the active ingredients can be further controlled. In other words, colloidal silica influences the release of the at least one active ingredient from the gel.

Hence, in a preferred embodiment, the composition further comprises colloidal silica, preferably having a bulk density of between 10 g/L and 120 g/L, preferably between 20 g/L and 110 g/L, more preferably between 30 g/L and 100 g/L, even more preferably between 40 g/L and 80 g/L . The person skilled in the art understands that the bulk density is measured according to standard ISO 787/11.

The composition may comprise between 1 wt.% and 30 wt.% of colloidal silica, based on the total weight of the composition, preferably between 5 wt.% and 25 wt.%, more preferably between 10 wt.% and 20 wt.%.

In a preferred embodiment, the composition further comprises between 1 wt.% and 30 wt.% of colloidal silica, based on the total weight of the composition, preferably between 5 wt.% and 25 wt.%, more preferably between 10 wt.% and 20 wt.%; wherein preferably the colloidal silica has a bulk density of between 10 g/L and 120 g/L, preferably between 20 g/L and 110 g/L, more preferably between 30 g/L and 100 g/L, even more preferably between 40 g/L and 80 g/L.

In a preferred embodiment, the pest control composition is a non-aqueous gel pest control composition comprising:
- between 50 wt.% and 80 wt.% of at least one active ingredient, based on the total weight of the composition, the at least one active ingredient being selected from the group consisting of d-limonene, orange oil, pine oil, and combinations thereof or selected from the group consisting of d-limonene, geraniol, and combinations thereof;
- between 1 wt. % and 20 wt.% of hydrophilic fumed silica, based on the total weight of the composition, the hydrophilic fumed silica having a specific surface area of between 125 m²/g and 250 m²/g;
- between 10 wt.% and 20 wt.% of at least one organic solvent, based on the total weight of the composition, preferably of isopropyl myristate; and
- between 10 wt.% and 20 wt.% of colloidal silica, based on the total weight of the composition, wherein the colloidal silica has a bulk density of between 40 g/L and 80 g/L.

### Fragrance

In addition to the at least one active ingredient, the composition may comprise one or more fragrances. The function of the fragrance is to provide the consumer with an olfactory end-of-life indication of the composition; in other words, it provides the consumer with an indication that the active ingredients have been diffused into the environment and that the composition is no longer effective as repellent.

Examples of fragrances are essential oils, synthetic oils or combinations thereof; however, when essential oils are used as fragrances the amounts of these is lower than when the essential oils are used as active ingredients. For example, an essential oil, when used as an active ingredient, may be used in a concentration higher than 5 wt.% or 10 wt.%; however, when used as a fragrance, it is used at a lower concentration. In particular, cedarwood oil can be used as an active, but its concentration in the composition may be higher than 25 wt.%; however, when used as a fragrance it may be less than 25 wt.%.

The one or more fragrances are preferably selected from the group consisting of cedarwood oil and citral, more preferably the one or more fragrances comprise or consist of citral.

In an embodiment, the composition further comprises one or more fragrances, preferably between 0.1 wt.% and 20 wt.% of the one or more fragrances, based on the total weight of the composition, more preferably between 0.5 wt.% and 15 wt.%, even more preferably between 1 wt.% and 10 wt.%; wherein preferably the one or more fragrances comprise or consist of citral.

In a preferred embodiment, the pest control composition is a non-aqueous gel pest control composition comprising:
- between 50 wt.% and 80 wt.% of at least one active ingredient, based on the total weight of the composition, the at least one active ingredient being selected from the group consisting of d-limonene, orange oil, pine oil, and combinations thereof or selected from the group consisting of d-limonene, geraniol, and combinations thereof;
- between 1 wt. % and 20 wt.% of hydrophilic fumed silica, based on the total weight of the composition, the hydrophilic fumed silica having a specific surface area of between 125 m²/g and 250 m²/g;
- between 10 wt.% and 20 wt.% of at least one organic solvent, based on the total weight of the composition, preferably of isopropyl myristate;
- between 10 wt.% and 20 wt.% of colloidal silica, based on the total weight of the composition, wherein the colloidal silica has a bulk density of between 40 g/L and 80 g/L; and
- 1 wt.% and 10 wt.% or one or more fragrances, based on the total weight of the composition, preferably wherein the one or more fragrances comprise or consist of citral.

### Preservative

The composition may further comprise a preservative in an amount ranging from 0.001 wt.% to 1 wt.%, based on the total weight of the composition, preferably ranging from 0.005 wt.% to 1 wt.%, more preferably ranging from 0.05 wt.% to 0.5 wt.%. The preservative is preferably butylated hydroxytoluene (BHT), or butylated hydroxyanisole.

The preservative prevents, in particular, degradation of the at least one active ingredient.

In a preferred embodiment, the pest control composition is an insect repellent composition, preferably a flying-insects repellent composition, such as mosquitoes, flies and moths.

In a preferred embodiment, the pest control composition is a mosquito and/or flies and/or moths repellent.

### Preparation

The compositions of the invention may be prepared, for example, by mixing all the components. For example, the hydrophilic fumed silica may be added to the at least one active ingredient and the at least one organic solvent. If applicable, colloidal silica is added with or after the hydrophilic fumed silica has been added.

In a second aspect, the invention relates to a pest control product comprising a chamber and the pest control composition according to the first aspect of the invention, wherein the pest control composition is contained within the chamber and the chamber has at least one wall which enables the vapours of the composition to diffuse into the environment in which the product is placed, preferably wherein the at least one wall comprises a first layer made of polyethylene laminated onto a second layer made of paper, the first layer being in direct contact with the composition.

It will be understood that the chamber may be a pouch, preferably a three-side seal pouch made of the same material, wherein the material comprises a first layer made of polyethylene laminated onto a second layer made of paper, the first layer being in direct contact with the composition.

In an embodiment, the first layer made of polyethylene and being in direct contact with the composition has a thickness of between 10 micron and 80 micron, preferably between 20 micron and 60 micron, more preferably between 25 micron and 55 micron; and/or the second layer made of paper has a grammage of between 80 g/m² and 180 g/m², preferably between 100 g/m² and 160 g/m², more preferably between 120 g/m² and 150 g/m².

In a preferred embodiment the polyethylene of the first layer is a low-density polyethylene (LDPE).

The person skilled in the art will understand that the chamber is a first packaging of the composition according to the invention. This chamber enables the vapours of the composition to diffuse into the environment in which the product is placed and it influences the emanation rate of the active ingredients in the composition.

The pest control product may comprise between 5 g and 20 g of the pest control composition according to the first aspect of the invention, preferably between 8 g and 15 g, more preferably between 8 g and 12 g.

The present inventors have observed that a pest control product comprising these amounts of the pest control composition according to the first aspect of the invention, contained in a chamber, e.g. a 3-side seal pouch, is effective in repelling flying insects for a period of between 15 days to 45 days.

The product may further comprise a container made of an impermeable sheet, in which the chamber containing the pest composition is located. The impermeable sheet may be a made of polyethylene laminated with a metal such aluminium, a laminate of polyethylene and ethylene-vinyl alcohol copolymer, or a laminate of biaxially-oriented polypropylene and ethylene-vinyl alcohol copolymer.

The person skilled in the art will understand that the container is a secondary packaging, which function is to avoid the emanation of the active ingredients from the composition.

Hence, when a product has such a secondary packaging, the consumer needs to remove the chamber with the pest control composition from the container. After this is done, the product starts emanating the at least one active ingredient.

The pest control product may be prepared by:
a) providing a pest control composition according to the first aspect of the invention,
b) providing a chamber having at least one wall which enables the vapours of the composition to diffuse into the environment,
c) placing the pest control composition into the chamber and sealing the chamber,
d) optionally, placing the pest control composition located in the chamber within a container made of an impermeable sheet and sealing the container.

In a third aspect, the invention relates to a use of the pest control composition according to the first aspect of the invention or the product according to the second aspect of the invention for repelling insects, preferably flying insects, more preferably mosquitoes, flies and moths.

In a fourth aspect, the invention relates to a method for repelling insects comprising:
a) providing the composition according to the first aspect of the invention or the product according to the second aspect of the invention;
b) placing the composition according to the first aspect of the invention or the product according to the second aspect of the invention in a place that allows for air circulation into the area from which insects are to be repelled;
c) optionally repeating steps a) and b) after a period of between 15 days to 45 days, preferably after a period of between 20 days to 40 days, more preferably after a period of 25 days to 35 days.

Optionally, if the product according to the second aspect of the invention comprises a container made of an impermeable sheet, in which the chamber containing the pest control composition is located, after step a) and before step b), removing of the chamber containing the pest control composition from the container.

The pest composition or the product may be placed in, for example, the frame of a window or a door.

The foregoing aspects may be freely combined with any of the foregoing aspects disclosed herein. In other words, the embodiments of the invention described herein with respect to any single embodiment shall be taken to apply *mutatis mutandis* to any other embodiment of the invention described herein.

The invention will be further described, by way of example, with the reference to the following non-limiting embodiments.

### Examples

### Formulations

**Table 1. Compositions**

| **Ingredient** | **Composition (wt.%)** | | | |
|---|---|---|---|---|
| | **1** | **2** | **3** | **4** |
| **D-Limonene** | 20 - 30 | 20 - 30 | 30 - 40 | 20 - 30 |
| **Orange oil** | 20 - 30 | | | 20 - 30 |
| **Pine oil** | 10 - 15 | | | 10 - 15 |
| **Geraniol** | | 40 - 50 | 30 - 40 | |
| **Hydrophilic fumed silica** | 1.5 - 6.5 | 1.5 - 6.5 | 1.5 - 6.5 | 1.5 - 6.5 |
| **Colloidal silica** | 10 - 20 | 10 - 20 | 10 - 20 | 10 - 20 |
| **Organic solvent** | 10 - 20 | 10 - 20 | 10 - 20 | 10 - 20 |
| **Preservative** | 0.05 - 0.5 | 0.05 - 0.5 | 0.05 - 0.5 | 0.05 - 0.5 |
| **Fragrance** | | | | 1 - 10 |

In table 1:
- Hydrophilic fumed silica is sold as Aerosil ^{™} 200 by Evonik.
- Organic solvent is isopropyl myristate.
- Fragrance: citral.

**Table 2. Products**

| | **Product** |
|---|---|
| | **A** |
| **Composition** | 1 |
| **Container** | Three-side seal laminated pouch: internal layer 20 µm - 40 µm LDPE external layer paper 130 g/m² |
| **Weight composition (g)** | 10.30 |
| **Weight product (g)** | 12.82 |

### Performance tests

### Emanation rate

The emanation rate was determined by measuring the weight loss of product A at a controlled temperature of 20°C and 1 atm. The weight of the product was measured at the beginning of the test and then every 7 days, for a total period of 28 days. Considering the only volatile components are present only in the formulation, the weight loss is reported as the weight of the composition. The results are shown in Table 3.

**Table 3. Emanation rate**

| | **Time (days)** | | | |
|---|---|---|---|---|
| | **7** | **14** | **21** | **28** |
| **Weight composition 1 (g)** | 6.38 | 3.41 | 2.93 | 2.88 |

Table 3 shows that the pest control product containing the composition according to the invention emanates for at least 28 days. In other words, the natural-based active ingredients are released to the environment where the composition or the product is located for at least 28 days.

### Repellency tests

The repellency against *Aedes* mosquitoes of the product in Table 2 was tested according to the 3-Chamber test as described above.

**Table 4. Repellency tests**

| | **Time (days)** | | | |
|---|---|---|---|---|
| | **7** | **14** | **21** | **28** |
| **Repellency % of product A** | 90 | 90 | 92 | 86 |

Table 4 shows that the pest control product containing the composition according to the invention provides a steady repellency for at least 28 days. The repellency properties of the composition according to the invention, which comprise only natural-based active ingredients, are demonstrated.

Hence one or more objects of the present invention are achieved by the present which is further elucidated in the appended claims.

## Claims

1. Pest control composition comprising hydrophilic fumed silica, at least one organic solvent and at least one active ingredient selected from the group consisting of eucalyptus oil, citronella oil, d-limonene, cedarwood oil, cinnamon oil, clove oil, garlic oil, lavender oil, lime oil, orange oil, pine oil, geranium oil, peppermint oil, rosemary oil, spearmint oil, cornmint oil, geraniol, thymol, and combinations thereof; wherein the composition comprises less than 10 wt.% water, based on the total weight of the composition; wherein the composition has the form of a gel.

2. Pest control composition according to claim 1, wherein the at least one active ingredient is selected from the group consisting of d-limonene, orange oil, pine oil, geraniol, and combinations thereof; preferably wherein the at least one active ingredient is selected from the group consisting of d-limonene, orange oil, pine oil, and combinations thereof or wherein the at least one active ingredient is selected from the group consisting of d-limonene, geraniol, and combinations thereof.

3. Pest control composition according to claim 1 or claim 2, wherein the hydrophilic fumed silica has a specific surface area of between 50 m²/g and 1000 m²/g, preferably between 75 m²/g and 750 m²/g, more preferably between 100 m²/g and 500 m²/g, even more preferably between 125 m²/g and 250 m²/g.

4. Pest control composition according to any of the preceding claims, wherein the at least one organic solvent is selected from the group consisting of silicone oils, fatty acid esters, fatty alcohols, glycols, and combinations thereof; preferably selected from the group consisting of fatty acid esters, glycols, and combinations thereof, more preferably wherein the at least one organic solvent comprises or consists of isopropyl myristate, dipropylene glycol and combinations thereof, even more preferably wherein the at least one organic solvent comprises or consists of isopropyl myristate.

5. Pest control composition according to any of the preceding claims, wherein the composition comprises:
- at least 30 wt.% of the at least one active ingredient, based on the total weight of the composition, preferably at least 40 wt.%, more preferably at least 50 wt.%, even more preferably between 50 wt.% and 80 wt.%; and/or
- at least 0.1 wt.% of hydrophilic fumed silica, based on the total weight of the composition, preferably at least 0.5 wt.%, more preferably at least 1 wt.%, even more preferably between 1 wt. % and 20 wt.%; and/or
- between 1 wt.% and 30 wt.% of the at least one organic solvent, based on the total weight of the composition, preferably between 5 wt.% and 25 wt.%, more preferably between 10 wt.% and 20 wt.%.

6. Pest control composition according to any of the preceding claims, wherein the composition further comprises colloidal silica, preferably having a bulk density of between 10 g/L and 120 g/L, preferably between 20 g/L and 110 g/L, more preferably between 30 g/L and 100 g/L, even more preferably between 40 g/L and 80 g/L.

7. Pest control composition according to claim 6, wherein the composition comprises between 1 wt.% and 30 wt.% of colloidal silica, based on the total weight of the composition, preferably between 5 wt.% and 25 wt.%, more preferably between 10 wt.% and 20 wt.%

8. Pest control composition according to any of the preceding claims, wherein the composition further comprises one or more fragrances, preferably between 0.1 wt.% and 20 wt.% of the one or more fragrances, based on the total weight of the composition, more preferably between 0.5 wt.% and 15 wt.%, even more preferably between 1 wt.% and 10 wt.%; wherein preferably the one or more fragrances comprise or consist of citral.

9. Pest control composition according to any of the preceding claims, wherein the composition is an insect repellent composition, preferably a flying-insects repellent composition.

10. A pest control product comprising a chamber and the pest control composition according to any of the preceding claims, wherein the pest control composition is contained within the chamber and the chamber has at least one wall which enables the vapours of the composition to diffuse into the environment in which the product is placed, preferably wherein the at least one wall comprises a first layer made of polyethylene laminated onto a second layer made of paper, the first layer being in direct contact with the composition.

11. Pest control product according to claim 10, wherein the first layer made of polyethylene and being in direct contact with the composition has a thickness of between 10 micron and 80 micron, preferably between 20 micron and 60 micron, more preferably between 25 micron and 55 micron; and/or
wherein the second layer made of paper has a grammage of between 80 g/m² and 180 g/m², preferably between 100 g/m² and 160 g/m², more preferably between 120 g/m² and 150 g/m².

12. Pest control product according to claim 10 or claim 11, wherein the product further comprises a container made of an impermeable sheet, in which the chamber containing the pest composition is located.

13. Pest control product according to any of the claims 10 - 12, wherein the product comprises between 5 g and 20 g of the pest control composition, preferably between 8 g and 15 g, more preferably between 8 g and 12 g.

14. Use of the pest control composition according to any of the claims 1-9 or the pest control product according to any of the claims 10- 13 for repelling insects, preferably flying insects, more preferably mosquitoes, flies and moths.

15. Method for repelling insects comprising:
a) providing the composition according to any of the claims 1 - 9 or the pest control product according to any of the claims 10 - 13;
b) placing the composition according to any of the claims 1 - 9 or the pest control product according to any of the claims 10 - 13 in a place that allows for air circulation into the area from which insects are to be repelled;
c) optionally repeating steps a) and b) after a period of between 15 days to 45 days, preferably after a period of between 20 days to 40 days, more preferably after a period of 25 days to 35 days.
